# FASCICULE DE BREVET EUROPEEN

(11) **EP 2 636 815 B1**
(45) Date de publication et mention de la délivrance du brevet: **28.03.2018**
(21) Numéro de dépôt: 13157820.5
(22) Date de dépôt: 05.03.2013
(51) Int. Cl.: E04F 11/18, F16B 7/04, F16B 2/10

(54) **Etrier de fixation d'une lisse de garde-corps sur un montant**
Bügel zum Befestigen eines Handlaufs eines Geländers auf einem Pfosten
U-bolt for attaching a handrail top rail to a post

(30) Priorité: 09.03.2012 FR 1252144
(43) Date de publication de la demande: 11.09.2013
(73) Titulaire: DANI ALU, 69280 Sainte Consorce (FR)
(72) Inventeur: Canivet, Damien, 69160 Tassin (FR); Duplat, Bruno, 69340 FRANCHEVILLE (FR)
(74) Mandataire: Chevalier, Renaud Philippe

(56) Documents cités:
- EP-A1- 2 159 344
- EP-A1- 2 447 549
- FR-A1- 2 915 500
- FR-A1- 2 931 498
- GB-A- 2 326 436
- GB-A- 2 336 391

## Description

La présente invention se rapporte à un étrier de fixation d'une lisse de garde-corps sur un montant.

Il est connu dans le domaine des dispositifs de garde-corps d'employer de tels étriers pour fixer les lisses sur les montants.

De façon connue, un dispositif de garde-corps est employé dans le domaine du bâtiment pour assurer la sécurisation des personnes situées sur des ouvrages en hauteur, du type terrasse ou toiture par exemple.

Un dispositif de garde-corps s'étend ainsi le long des bordures de terrasse ou de toiture, et comprend une succession de montants fixés sur l'ouvrage au moyen de sabots de garde-corps généralement vissés dans ledit ouvrage. Il est également d'usage de prévoir entre les montants une ou plusieurs lisses, autrement appelées barres ou barreaux, comme par exemple une lisse haute rapportée au niveau des extrémités supérieures libres respectives des montants et formant une main courante et éventuellement une ou plusieurs lisses basses ou intermédiaires disposées sous la barre haute.

Un premier étrier, connu du document EP 2 159 344, comporte une bague fendue délimitant un passage pour la lisse. Il suffit ainsi d'engager la lisse dans la bague et enfin de serrer cette lisse au moyen d'une vis traversant la fente de la bague. Un tel premier étrier n'est cependant pas entièrement satisfaisant dans la mesure où l'introduction de la lisse dans la bague doit s'effectuer dans le sens de la longueur de la lisse, autrement dit on doit introduire une extrémité de la lisse dans la bague puis faire glisser la lisse à l'intérieur de cette bague. Quand la lisse doit être introduite dans plusieurs étriers successifs, cette opération peut s'avérer particulièrement fastidieuse.

Un second étrier, connu du document FR 2 915 500, comporte deux mâchoires indépendantes l'une de l'autre, avec une mâchoire supérieure fixée sur l'extrémité supérieure du montant et une mâchoire inférieure fixée dans un rail vertical du montant, permettant ainsi de fixer une lisse haute. Pour la fixation d'une lisse intermédiaire ou basse, ce document FR 2 915 500 prévoit l'emploi d'une seule mâchoire inférieure formant un crochet de retenue de la lisse. Un tel second étrier n'est également pas entièrement satisfaisant dans la mesure où l'opérateur doit maintenir la mâchoire inférieure par lui-même le temps d'introduire la lisse puis enfin de serrer la mâchoire dans le rail vertical du montant, ce qui peut s'avérer particulièrement peu adapté avec des lisses de grande longueur et/ou lourdes.

L'état de la technique peut également être illustré par les enseignements des documents GB 2 326 436 et GB 2 336 391 qui divulguent chacun un étrier de fixation d'une lisse de garde-corps sur un montant, qui comporte une première mâchoire et une seconde mâchoire montée pivotante sur la première mâchoire, où la première mâchoire est fixée sur le montant au moyen d'un système en étau monté autour du montant et serré au moyen d'une vis de serrage. L'emploi d'un système en étau pour fixer la première mâchoire est particulièrement gênant car l'étau forme une pièce saillante autour du montant, sans compter l'aspect inesthétique. L'étrier du document GB 2 326436 divulgue les caractéristiques du préambule de la revendication 1. L'invention vise à remédier en tout ou partie aux inconvénients précités en proposant un étrier qui permette une mise en place aisée et rapide de la lisse, sans contraindre l'opérateur à supporter tout le poids de la lisse pendant cette opération de mise en place, tout en offrant une fixation sur le montant qui soit aisée et esthétique.

A cet effet, l'invention propose un étrier de fixation d'une lisse de garde-corps sur un montant, du type comportant une première et une seconde mâchoires conçues pour enserrer tout ou partie d'une section de la lisse, ladite première mâchoire étant pourvue de moyens de fixation sur le montant, et ladite seconde mâchoire étant maintenue sur la première mâchoire au moyen d'un organe de liaison et montée mobile sur la première mâchoire entre une position serrée dans laquelle les première et seconde mâchoires sont destinées à enserrer tout ou partie d'une section de la lisse, et une position desserrée permettant l'introduction de la lisse entre les première et seconde mâchoires ;
ledit étrier étant remarquable en ce que la première mâchoire comporte une face antérieure conformée pour serrer la lisse contre elle lorsque la seconde mâchoire est dans la position serrée, et une face postérieure opposée conformée pour être ancrée sur le montant, et dans lequel les moyens de fixation de la première mâchoire sur le montant comportent :
- au moins un organe formant butée faisant saillie de ladite face postérieure de la première mâchoire,
- au moins un orifice traversant ménagé dans ladite première mâchoire entre ses faces antérieure et postérieure ; et
- un organe d'ancrage engagé dans ledit orifice traversant ;
où ledit orifice traversant est agencé et disposé relativement audit organe formant butée de sorte que, en situation sur un montant, l'organe d'ancrage traverse ledit orifice traversant pour venir en appui contre une paroi d'une rainure dudit montant et en retour plaquer ledit organe formant butée contre une autre paroi de ladite rainure du montant afin d'ancrer ladite première mâchoire sur ledit montant ;
et en ce que la face antérieure de la première mâchoire présente, d'une part, une surface de serrage, de préférence incurvée, conformée pour épouser une partie de la section de la lisse lorsque la seconde mâchoire est dans la position serrée et, d'autre part, deux surfaces latérales reliant ladite surface de serrage à la face postérieure, et dans lequel l'orifice traversant débouche dans l'une desdites surfaces latérales en-dessous de la surface de serrage, de sorte que l'organe d'ancrage soit accessible en-dessous de la lisse une fois celle-ci serrée entre les deux mâchoires.

Ainsi, un tel étrier de fixation selon l'invention permet d'introduire aisément tout ou partie de la section de la lisse entre les mâchoires de par une position desserrée stable dans laquelle on peut poser la lisse sur la seconde mâchoire, cette second mâchoire n'étant pas fixée directement sur le montant mais étant maintenue sur la première mâchoire ; cette première mâchoire étant quant à elle fixée directement sur le montant. Cet étrier évite également d'avoir à forcer le passage entre les deux mâchoires pour l'introduction de la lisse, minimisant ainsi les risques de rayure de la lisse.

En outre, l'emploi d'un moyen de fixation de la première mâchoire dans une rainure du montant, avec organe formant butée et organe d'ancrage, permet une fixation aisée et esthétique sur le montant. Contrairement à l'étrier connu du document EP 2 159 344 où l'orifice traversant débouche dans la surface de serrage pour que la lisse dissimule au final l'orifice traversant et l'organe d'ancrage, la présente invention propose de faire déboucher l'orifice traversant à côté de la surface de serrage, en l'occurrence dans l'une des deux faces latérales, pour permettre un accès à l'organe d'ancrage même quand la lisse est en place. De manière avantageuse, cet orifice traversant débouche donc sous la lisse pour pouvoir accéder à l'organe d'ancrage. Ainsi, la position de l'organe d'ancrage permet de régler la position de l'étrier sur le montant sans avoir besoin de déposer la lisse qu'il maintient.

Dans un mode de réalisation, les première et seconde mâchoires sont désolidarisables entre elles, avec notamment l'une au moins des première et seconde mâchoires qui est désolidarisable par rapport à l'organe de liaison pour permettre la désolidarisation entre les deux mâchoires.

Ainsi, il est aisé de démonter la seconde mâchoire sans avoir à ôter la première mâchoire hors du montant, permettant ainsi d'effectuer des opérations de montage/démontage de manière aisée et rapide.

Dans un mode de réalisation, l'organe de liaison comporte un axe de pivotement, de sorte que la seconde mâchoire est montée mobile en rotation sur la première mâchoire.

Un tel montage à pivot est particulièrement pratique pour gérer l'écartement des deux mâchoires et donc faciliter les opérations de montage/démontage.

Selon une possibilité de l'invention, l'axe de pivotement est amovible pour permettre la désolidarisation entre les deux mâchoires.

Selon une forme d'exécution, la première mâchoire comporte un charnon fixe et la seconde mâchoire comporte un charnon mobile articulée sur le charnon fixe au moyen de l'axe de pivotement formant axe de charnière.

Ainsi, les deux charnons forment, avec l'axe de pivotement, une charnière garantissant solidité et pérennité pour l'étrier.

Dans une réalisation particulière, l'un des deux charnons comporte deux flasques parallèles délimitant une fente et dans lesquelles sont ménagés des orifices de réception de l'axe de pivotement, et l'autre des deux charnons comporte une saillie engagée dans ladite fente et dans laquelle est ménagé un orifice de réception de l'axe de pivotement.

Selon une forme d'exécution, les deux mâchoires définissent, en position serrée, un logement s'étendant selon une direction principale dite longitudinale destinée à correspondre à la direction longitudinale de la lisse, et l'axe de pivotement s'étend parallèlement à cette direction principale longitudinale.

Autrement dit, la seconde mâchoire pivote par rapport à la première mâchoire autour d'un axe parallèle à la direction longitudinale de la lisse ; la lisse se présentant généralement sous la forme d'un profilé, par exemple de section circulaire, s'étendant selon une direction principale longitudinale. Ainsi, une telle direction de l'axe de pivotement est particulièrement adaptée pour une lisse destinée à s'étendre selon une direction longitudinale horizontale.

De manière avantageuse, l'étrier comporte en outre des moyens de serrage agencés pour mouvoir la seconde mâchoire entre la position desserrée et la position serrée et maintenir la seconde mâchoire dans la position serrée.

Dans un mode de réalisation particulier, les moyens de serrage comprennent :
- un orifice taraudé ménagé dans la première mâchoire,
- un orifice traversant ménagé dans la seconde mâchoire, et
- une vis de serrage des deux mâchoires présentant, d'une part, une tige filetée traversant ledit orifice traversant et s'engageant par vissage dans ledit orifice taraudé et, d'autre part, une tête venant en butée contre la seconde mâchoire.

Selon une forme d'exécution, les première et seconde mâchoires présentent chacune une surface de serrage, de préférence incurvée, conformée pour épouser une partie de la section de la lisse lorsque la seconde mâchoire est dans la position serrée, et l'orifice taraudé est ménagé en-dessous de la surface de serrage de la première mâchoire et l'orifice traversant est ménagé en-dessous de la surface de serrage de la seconde mâchoire.

Ainsi, la vis de serrage s'étend en-dessous de la lisse en situation sur le garde-corps, cette lisse étant introduite par le haut entre les deux mâchoires, permettant de ne pas gêner l'introduction de la lisse avec la vis de serrage.

De préférence, la vis de serrage s'étend au-dessus de l'organe de liaison (eg. axe de pivotement), autrement dit entre l'organe de liaison et les deux surfaces de serrage, pour garantir un serrage efficace.

La présente invention se rapporte également aux caractéristiques suivantes :
- l'inclinaison entre l'orifice traversant et l'organe formant butée permet que l'organe formant butée et l'organe d'ancrage soient divergents en s'écartant l'un de l'autre vers des directions différentes ;
- l'organe formant butée fait saillie d'une partie plane de la face postérieure et l'orifice traversant s'étend de façon oblique par rapport à ladite partie plane ;
- l'organe formant butée présente un cran adapté pour retenir l'organe formant butée dans une rainure du montant ;
- l'orifice traversant est fileté et l'organe d'ancrage se présentant sous la forme d'une pièce rectiligne pourvue d'un filetage externe adapté pour coopérer avec ledit orifice traversant ;
- l'organe d'ancrage se termine par une pointe adaptée pour venir poinçonner une paroi du montant en position dite d'ancrage.

D'autres caractéristiques et avantages apparaîtront dans la description qui va suivre d'un mode de réalisation d'un étrier selon l'invention, donné à titre d'exemple non limitatif, en référence aux dessins annexés dans lesquels :
- la figure 1 est une vue schématique en perspective d'un étrier selon l'invention fixé sur un montant et supportant une lisse de garde-corps ;
- la figure 2 est une vue schématique zoomée de la zone Il de la figure 1 ;
- la figure 3 est une vue schématique en perspective de l'étrier des figures 1 et 2, avec la vis de serrage non engagée ;
- la figure 4 est une vue schématique de face de l'étrier de la figure 3 ;
- la figure 5 est une vue schématique en perspective de la première mâchoire de l'étrier des figures 1 à 4 ;
- la figure 6 est une vue schématique en perspective de la seconde mâchoire de l'étrier des figures 1 à 4 ;
- les figures 7 et 8 sont des vues schématiques de côté de l'étrier des figures 1 à 5 dans respectivement une position desserrée permettant l'introduction de la lisse entre les deux mâchoires et une position serrée dans laquelle la lisse est serrée et maintenue entre les deux mâchoires ;
- la figure 9 est une vue de côté d'un montant de garde-corps présentant une portion inclinée à 45° par rapport à la verticale et sur lequel sont fixés trois étriers conformes à l'invention.

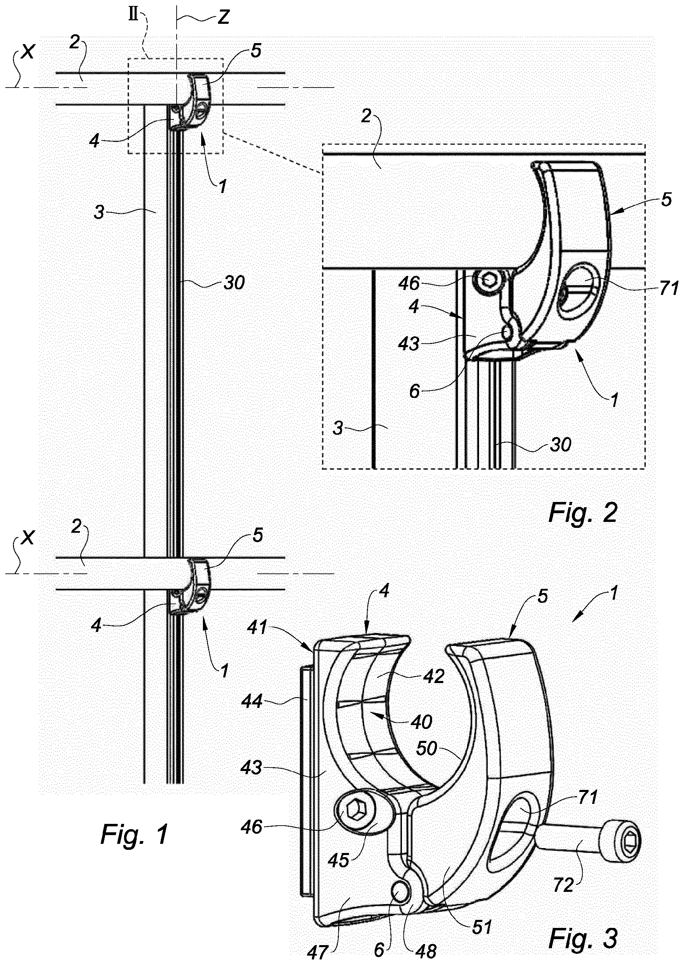

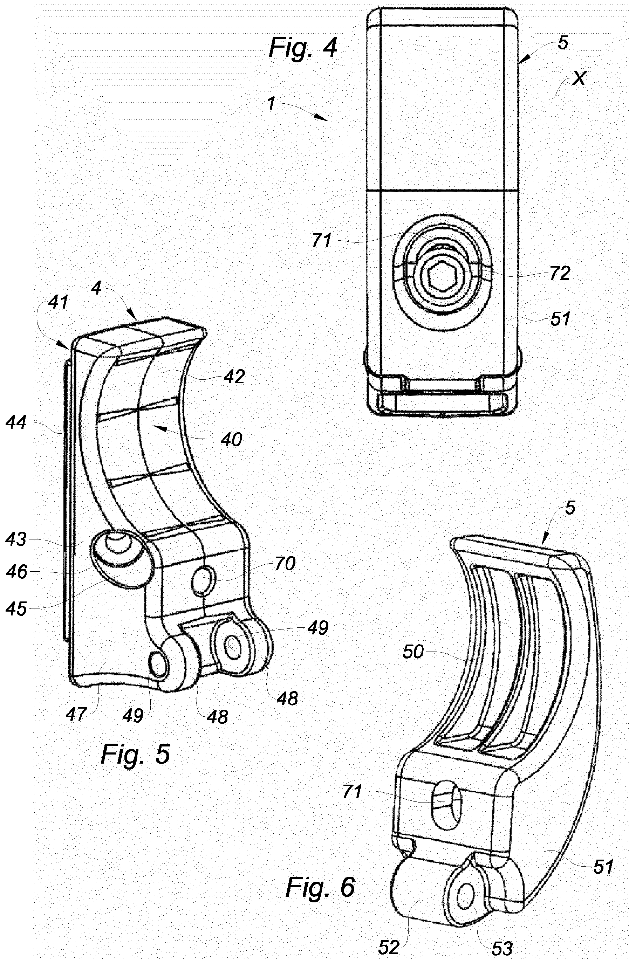

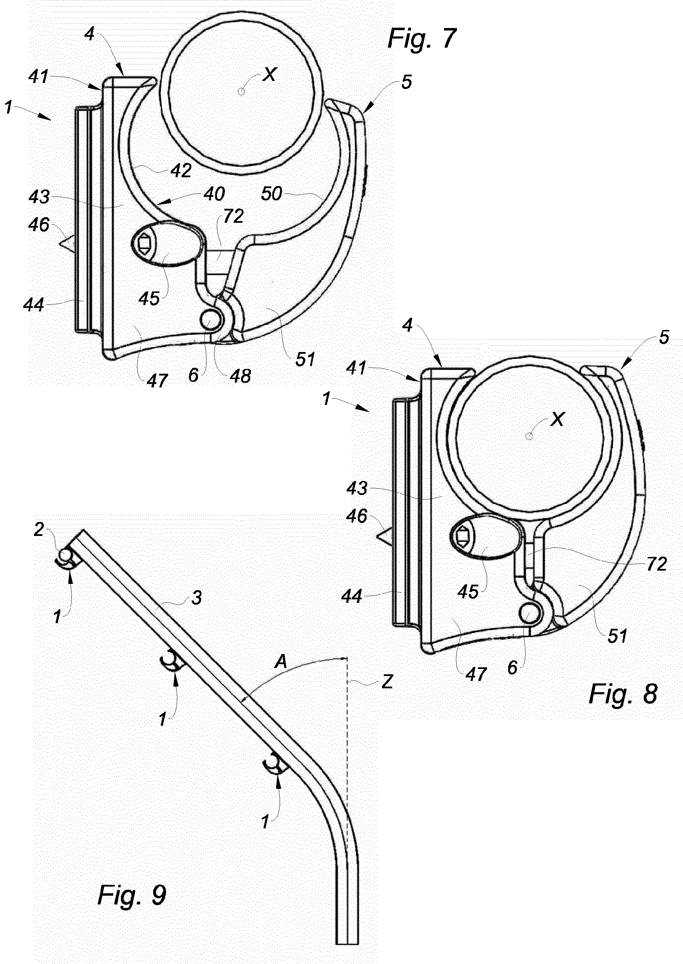

En référence aux figures 1 à 10, l'étrier 1 de fixation d'une lisse 2 de garde-corps sur un montant 3, comporte deux mâchoires 4,5 conçues pour enserrer entre elles la lisse 2 afin de la maintenir en place sur le montant 3. Pour la suite de la description, la lisse 2 est constituée d'un profilé tubulaire s'étendant selon une direction principale dite longitudinale X et présente une section transversale sensiblement circulaire. Dans les exemples illustrés sur les figures 1 et 9, la direction longitudinale X est horizontale, mais il est bien entendu envisageable que cette direction longitudinale X soit inclinée par rapport à l'horizontale, dans le cas notamment d'un garde-corps monté sur une toiture en pente.

L'étrier 1 est fixé sur une portion verticale d'un montant 3 s'étendant essentiellement selon une direction verticale Z dans l'exemple des figures 1 et 2, ou l'étrier 1 est fixé sur une portion inclinée du montant 3 selon un angle A non nul, par exemple de l'ordre de 45°, par rapport à la direction verticale Z dans l'exemple de la figure 9.

La première mâchoire 4 est destinée à être fixée sur le montant 3, seule cette première mâchoire 3 étant fixée sur le montant 3. Cette première mâchoire 4 comporte deux faces opposées, à savoir :
- une face antérieure 40 située du côté opposée au montant 3 et conformée pour serrer la lisse 2 contre elle en position serrée ; et
- une face postérieure 41 conformée pour être ancrée sur le montant 3.

La face antérieure 40 présente spécifiquement une surface de serrage 42 incurvée, de forme complémentaire à celle de la lisse 2 et donc de forme arquée pour une lisse 2 cylindrique, cette surface de serrage 42 étant conformée pour épouser une partie de la section de la lisse 2 en position serrée. La face antérieure 40 comporte en outre deux surfaces latérales 43, de part et d'autre de la surface de serrage 42 et reliant cette surface de serrage 42 à la face postérieure 41.

Pour la fixation de la première mâchoire 4 sur le montant 3, cette première mâchoire 3 est pourvue de moyens de fixation comprenant :
- un organe formant butée 44 faisant saillie de la face postérieure 41,
- un orifice traversant 45 rectiligne, de section circulaire, ménagé dans la première mâchoire 4 entre ses faces antérieure 40 et postérieure 41, et débouchant dans l'une des surfaces latérales 43, et
- un organe d'ancrage 46 engagé dans cet orifice traversant 45.

L'orifice traversant 45 est incliné par rapport à la face postérieure 41, signifiant qu'il débouche en biais ou à l'oblique dans ladite face postérieure 41. En outre, cet orifice traversant 45 présente un filetage interne.

Concernant l'organe formant butée 44, celui-ci se présente sous la forme d'une pièce rectiligne pourvue d'un cran, du type entaille ou rainure

L'organe d'ancrage 46 est constitué d'une vis d'ancrage comportant une tige filetée dont une première extrémité se termine en pointe (visible sur les figures 7 et 8) et dont la deuxième extrémité opposée présente une empreinte pour un outil de vissage. La vis d'ancrage 46 est vissée dans l'orifice traversant 45, en engageant la première extrémité dans l'entrée de l'orifice traversant 45. En utilisation, la vis d'ancrage 46 est vissée dans l'orifice traversant 45 jusqu'à déboucher hors de cet orifice traversant 45 et ainsi saillir de la face postérieure 41.

Du fait de l'inclinaison particulière de l'orifice traversant 45, la vis d'ancrage 46 et l'organe formant butée 44 sont divergents en s'écartant l'un de l'autre vers des directions différentes.

Le montant 3 présente une rainure 30 rectiligne dans laquelle la première mâchoire 4 est montée à coulissement. L'organe formant butée 44 est engagée dans la rainure 30 de sorte que le cran coopère avec une première paroi latérale de la rainure 30. Il est alors possible de faire coulisser la première mâchoire 4 dans cette rainure 30 jusqu'à la hauteur souhaitée.

Pour fixer la première mâchoire 4, il suffit de visser la vis d'ancrage 46 qui vient alors en butée contre une seconde paroi latérale de la rainure 30, parallèle à la première paroi latérale. Du fait de l'inclinaison de l'orifice traversant 45, la vis d'ancrage 46 imprime un effort sur l'organe formant butée 44. Dans la position finale d'ancrage, la première mâchoire 4 est ancrée sur le montant 3 grâce à l'organe formant butée 44 et à la vis d'ancrage 46 qui viennent se prendre à l'intérieur de la rainure 30 sur les deux parois latérales parallèles.

Comme visible sur les figures 2 et 9, l'orifice traversant 45 débouche dans l'une des surfaces latérales 43 en-dessous de la surface de serrage 42, de sorte que la vis d'ancrage 46 est accessible en-dessous de la lisse 2 une fois celle-ci serrée entre les deux mâchoires 4, 5.

La seconde mâchoire 5 présente une surface de serrage 50 incurvée, de forme complémentaire à celle de la lisse 2 et donc de forme arquée pour une lisse 2 cylindrique, cette surface de serrage 50 étant conformée pour épouser une partie de la section de la lisse 2 en position serrée.

La seconde mâchoire 5 n'est quant à elle pas fixée sur le montant 3, mais est maintenue sur la première mâchoire 4 au moyen d'un axe de pivotement 6 et est montée mobile en rotation sur cette première mâchoire 4 entre :
- une position serrée (illustrée sur les figures 1, 2 et 9) dans laquelle les deux mâchoires 4, 5 enserrent tout ou partie d'une section de la lisse 2 entre leurs surfaces de serrage 42, 50 respectives ; et
- une position desserrée (illustrée sur la figure 8) permettant l'introduction de la lisse 2 entre les deux mâchoires 4, 5.

Pour l'articulation rotative de la seconde mâchoire 5 sur la première mâchoire 4, la première mâchoire 4 comporte un charnon fixe 47 et la seconde mâchoire 5 comporte un charnon mobile 51 articulée sur le charnon fixe 47 au moyen de l'axe de pivotement 6 formant axe de charnière. Le charnon fixe 47 est disposé en-dessous de la surface de serrage 42 et le charnon mobile 51 est disposé en-dessous de la surface de serrage 50.

Le charnon fixe 47 comporte deux flasques 48 parallèles délimitant une fente et dans lesquelles sont ménagés des orifices de réception 49 de l'axe de pivotement 6, et le charnon mobile 51 comporte une saillie 52 engagée dans cette fente et dans laquelle est ménagé un orifice de réception 53 de l'axe de pivotement 6.

Les mâchoires 4, 5 définissent, en position serrée, un logement partiellement circulaire s'étendant selon une direction principale dite longitudinale destinée à correspondre à la direction longitudinale X de la lisse 2, et l'axe de pivotement 6 s'étend parallèlement à cette direction principale longitudinale X.

Il est par ailleurs à noter que l'axe de pivotement est amovible, autrement dit il peut être retiré des deux charnons, pour permettre la désolidarisation entre les deux mâchoires 4, 5 ; cet axe de pivotement pouvant se présenter sous la forme d'une goupille cannelée.

L'étrier 1 comporte en outre des moyens de serrage agencés pour mouvoir la seconde mâchoire 5 entre la position desserrée et la position serrée, et pour maintenir la seconde mâchoire 5 dans la position serrée et également dans la position desserrée.

A cet effet, ces moyens de serrage comprennent :
- un orifice taraudé 70 ménagé dans la première mâchoire 4, et plus spécifiquement ménagé dans le charnon fixe 47, au-dessus des flasques 48 et donc de l'axe de pivotement 6 et donc en-dessous de la surface de serrage 42 ;
- un orifice traversant 71 ménagé dans la seconde mâchoire 5, et plus spécifiquement ménagé dans le charnon mobile 51, au-dessus de la saillie 52 et donc en-dessous de la surface de serrage 50 ; et
- une vis de serrage 72 des deux mâchoires 4, 5 présentant, d'une part, une tige filetée traversant l'orifice traversant 71 et s'engageant par vissage dans l'orifice taraudé 70 et, d'autre part, une tête venant en butée contre la seconde mâchoire 5.

Ainsi, en partant de la position desserrée, il suffit de serrer la vis de serrage 72 pour que sa tête vienne en butée contre le pourtour de l'orifice traversant 71, et imprime un effort de rotation sur la seconde mâchoire 5 jusqu'à serrage de la lisse 2 entre les deux mâchoires 4, 5.

Il est par ailleurs à noter que, dans la position desserrée, la vis de serrage 7 maintient la seconde mâchoire 4 dans la position desserrée, évitant à celle-ci de basculer sous son propre poids, permettant ainsi de poser la lisse 2 entre les deux mâchoires 4, 5 sans que celle-ci ne risque de chuter. En effet, dans la position desserrée illustrée sur la figure 7, on note que les deux mâchoires 4, 5 définissent une forme en « V » qui permet l'introduction de la lisse 2 tout en empêchant sa chute.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention. Il est ainsi envisageable de prévoir d'autres moyens de fixation de la première mâchoire sur le montant, comme par exemple une fixation par vis ou au moyen d'un étrier, tout comme il est envisageable de prévoir d'autres formes de réalisation des moyens de serrage.

## Revendications

1. Etrier (1) de fixation d'une lisse (2) de garde-corps sur un montant (3), du type comportant une première et une seconde mâchoires (4, 5) conçues pour enserrer tout ou partie d'une section de la lisse (2), ladite première mâchoire (4) étant pourvue de moyens de fixation sur le montant (3), et ladite seconde mâchoire (5) étant maintenue sur la première mâchoire (4) au moyen d'un organe de liaison (6) et montée mobile sur la première mâchoire (4) entre une position serrée dans laquelle les première et seconde mâchoires (4, 5) sont destinées à enserrer tout ou partie d'une section de la lisse (2), et une position desserrée permettant l'introduction de la lisse entre les première et seconde mâchoires (4, 5) ; la première mâchoire (4) comportant une face antérieure (40) conformée pour serrer la lisse (2) contre elle lorsque la seconde mâchoire (5) est dans la position serrée, et une face postérieure (41) opposée conformée pour être ancrée sur le montant (3), et les moyens de fixation de la première mâchoire (4) sur le montant (3) comportent :
- au moins un organe formant butée (44) faisant saillie de ladite face postérieure (41) de la première mâchoire (4), et
- un organe d'ancrage (46) engagé dans ledit orifice traversant (45) ; où ledit orifice traversant (45) est agencé et disposé relativement audit organe formant butée (44) de sorte que, en situation sur un montant (3), l'organe d'ancrage (46) traverse ledit orifice traversant (45) pour venir en appui contre une paroi d'une rainure (30) dudit montant (3) et en retour plaquer ledit organe formant butée (44) contre une autre paroi de ladite rainure (30) du montant (3) afin d'ancrer ladite première mâchoire (4) sur ledit montant (3) ; ladite face antérieure (40) de la première mâchoire (4) présente, d'une part, une surface de serrage (42), de préférence incurvée, conformée pour épouser une partie de la section de la lisse (2) lorsque la seconde mâchoire (5) est dans la position serrée et, d'autre part, deux surfaces latérales (43) reliant ladite surface de serrage (42) à la face postérieure (41), ledit étrier (1) étant **caractérisé en ce que** les moyens de fixation de la première mâchoire sur le montant (3) comportent au moins un orifice traversant (45) ménagé dans ladite première mâchoire (4) entre ses faces antérieure et postérieure et ledit orifice traversant (45) débouche dans l'une desdites surfaces latérales (43) en-dessous de la surface de serrage (42), de sorte que l'organe d'ancrage (46) soit accessible en-dessous de la lisse (2) une fois celle-ci serrée entre les deux mâchoires (4, 5).

2. Etrier (1) selon la revendication 1, dans lequel les première et seconde mâchoires (4, 5) sont désolidarisables entre elles, avec notamment l'une au moins des première et seconde mâchoires (4, 5) qui est désolidarisable par rapport à l'organe de liaison (6) pour permettre la désolidarisation entre les deux mâchoires (4, 5).

3. Etrier (1) selon l'une quelconque des revendications précédentes, dans lequel l'organe de liaison comporte un axe de pivotement (6), de sorte que la seconde mâchoire (5) est montée mobile en rotation sur la première mâchoire (4).

4. Etrier (1) selon les revendications 2 et 3, dans lequel l'axe de pivotement (6) est amovible pour permettre la désolidarisation entre les deux mâchoires (4, 5).

5. Etrier (1) selon la revendication 4, dans lequel la première mâchoire (4) comporte un charnon fixe (47) et la seconde mâchoire (5) comporte un charnon mobile (51) articulée sur le charnon fixe (47) au moyen de l'axe de pivotement (6) formant axe de charnière.

6. Etrier (1) selon la revendication 5, dans lequel l'un des deux charnons (47 ; 51) comporte deux flasques (48) parallèles délimitant une fente et dans lesquelles sont ménagés des orifices de réception (49) de l'axe de pivotement (6), et l'autre des deux charnons (47 ; 51) comporte une saillie (52) engagée dans ladite fente et dans laquelle est ménagé un orifice de réception (53) de l'axe de pivotement (6).

7. Etrier (1) selon l'une quelconque des revendications 3 à 6, dans lequel les deux mâchoires (4, 5) définissent, en position serrée, un logement s'étendant selon une direction principale dite longitudinale destinée à correspondre à la direction longitudinale (X) de la lisse (2), et dans lequel l'axe de pivotement (6) s'étend parallèlement à cette direction principale longitudinale (X).

8. Etrier (1) selon l'une quelconque des revendications précédentes, **caractérisé en ce qu'**il comporte en outre des moyens de serrage (70, 71, 72) agencés pour mouvoir la seconde mâchoire (5) entre la position desserrée et la position serrée et maintenir la seconde mâchoire (5) dans la position serrée.

9. Etrier (1) selon la revendication 8, dans lequel les moyens de serrage comprennent :
- un orifice taraudé (70) ménagé dans la première mâchoire (4),
- un orifice traversant (71) ménagé dans la seconde mâchoire (5), et
- une vis de serrage (72) des deux mâchoires (4, 5) présentant, d'une part, une tige filetée traversant ledit orifice traversant (71) et s'engageant par vissage dans ledit orifice taraudé (70) et, d'autre part, une tête venant en butée contre la seconde mâchoire (5).

10. Etrier (1) selon la revendication 9, dans lequel les première et seconde mâchoires (4, 5) présentent chacune une surface de serrage (42 ; 50), de préférence incurvée, conformée pour épouser une partie de la section de la lisse (2) lorsque la seconde mâchoire (5) est dans la position serrée, et dans lequel l'orifice taraudé (70) est ménagé en-dessous de la surface de serrage (42) de la première mâchoire (4) et l'orifice traversant (71) est ménagé en-dessous de la surface de serrage (50) de la seconde mâchoire (5).

## Patentansprüche

1. Bügel (1) zur Befestigung eines Handlaufs (2) eines Geländers auf einem Holm (3) der Art, umfassend eine erste und eine zweite Backe (4, 5), die entworfen sind, um die Gesamtheit oder einen Teil einer Sektion des Handlaufs (2) zu umschließen, wobei die erste Backe (4) mit Mitteln zur Befestigung auf dem Holm (3) versehen ist und die zweite Backe (5) auf der ersten Backe (4) mit Hilfe eines Verbindungsorgans (6) gehalten wird und beweglich auf der ersten Backe (4) zwischen einer geschlossenen Position, in der die erste und die zweite Backe (4, 5) ausgelegt sind, die Gesamtheit oder einen Teil einer zweiten Sektion des Handlaufs (2) zu umschließen, und einer zweiten geöffneten Position montiert ist, die die Einführung des Handlaufs zwischen die erste und die zweite Backe (4, 5) ermöglicht;
wobei die erste Backe (4) eine vordere Seite (40) umfasst, die ausgebildet ist, um den Handlauf (2) gegen sie zu schließen, wenn sich die zweite Backe (5) in der geschlossenen Position befindet, und eine gegenüber liegende hintere Seite (41), die ausgebildet ist, um auf dem Holm (3) verankert zu sein, und wobei die Mittel zur Befestigung der ersten Backe (4) auf dem Holm (3) Folgendes umfassen:
- mindestens ein Organ, das einen Anschlag (44) bildet, das von der hinteren Seite (41) der ersten Backe (4) vorspringt, und
- ein Verankerungsorgan (46), das in die Durchgangsöffnung (45) eingreift;
wobei die Durchgangsöffnung (45) mit Bezug auf das Organ, das einen Anschlag (44) bildet, derart angebracht und angeordnet ist, dass, in der Situation auf dem Holm (3), das Verankerungsorgan (46) die Durchgangsöffnung (45) quert, um gegen eine Wand einer Nut (30) des Holms (3) aufzuliegen und dafür das Organ, das einen Anschlag (44) bildet, gegen eine weitere Wand der Nut (30) des Holms (3) zu drücken, um die erste Backe (4) auf dem Holm (3) zu verankern;
die vordere Seite (40) der ersten Backe (4) einerseits eine Verschlussoberfläche (42), vorzugsweise gekrümmt, aufweist, die ausgebildet ist, um sich an einen Teil der Sektion des Handlaufs (2) anzupassen, wenn sich die zweite Backe (5) in der geschlossenen Position befindet, und andererseits zwei seitliche Oberflächen (43), die die Verschlussoberfläche (42) mit der hinteren Seite (41) verbinden, wobei der Bügel (1) **dadurch gekennzeichnet ist, dass** die Mittel zur Befestigung der ersten Backe auf dem Holm (3) mindestens eine Durchgangsöffnung (45) umfassen, die in der ersten Backe (4) zwischen ihrer vorderen und hinteren Seite angebracht sind und die Durchgangsöffnung (45) in eine der seitlichen Oberflächen (43) mündet, unter der Verschlussoberfläche (42), so dass das Verankerungsorgan (46) unterhalb des Handlaufs (2) zugänglich ist, nachdem dieser zwischen den zwei Backen (4, 5) geschlossen ist.

2. Bügel (1) nach Anspruch 1, wobei die erste und die zweite Backe (4, 5) voneinander getrennt werden können, mit mindestens einer der ersten und zweiten Backe (4, 5) die mit Bezug auf das Verbindungsorgan (6) getrennt werden kann, um die Trennung zwischen den zwei Backen (4, 5) zu ermöglichen.

3. Bügel (1) nach einem der vorhergehenden Ansprüche, wobei das Verbindungsorgan eine Schwenkachse (6) umfasst, so dass die zweite Backe (5) beweglich in Rotation auf der ersten Backe (4) montiert ist.

4. Bügel (1) nach Anspruch 2 und 3, wobei die Schwenkachse (6) abnehmbar ist, um die Trennung zwischen den zwei Backen (4, 5) zu ermöglichen.

5. Bügel (1) nach Anspruch 4, wobei die erste Backe (4) einen fixierten Scharnierteil (47) und die zweite Backe (5) einen beweglichen Scharnierteil (51) umfasst, der auf dem fixierten Scharnierteil (47) mit Hilfe der Schwenkachse (6) gelenkig verbunden ist, die eine Scharnierachse bildet.

6. Bügel (1) nach Anspruch 5, wobei einer der zwei Scharnierteile (47; 51) zwei parallele Flansche (48) umfasst, die einen Schlitz begrenzen, und in denen Aufnahmeöffnungen (49) der Schwenkachse (6) angebracht sind, und der andere der zwei Scharnierteile (47; 51) einen Vorsprung (52) umfasst, der in den Schlitz eingreift, und in dem eine Aufnahmeöffnung (53) der Schwenkachse (6) angebracht ist.

7. Bügel (1) nach einem der Ansprüche 3 bis 6, wobei die zwei Backen (4, 5) in der geschlossenen Position ein Lager umfassen, das sich in einer Hauptrichtung, bezeichnet als Längsrichtung, erstreckt, die ausgelegt ist, um der Längsrichtung (X) des Handlaufs (2) zu entsprechen, und wobei sich die Schwenkachse (6) parallel zu dieser Haupt-Längsrichtung (X) erstreckt.

8. Bügel (1) nach einem der vorhergehenden Ansprüche, **dadurch gekennzeichnet, dass** er außerdem Verschlussmittel (70, 71, 72) umfasst, die angeordnet sind, um die zweite Backe (5) zwischen der geöffneten Position und der geschlossenen Position zu bewegen und die zweite Backe (5) in der geschlossenen Position zu halten.

9. Bügel (1) nach Anspruch 8, wobei die Verschlussmittel Folgendes aufweisen:
- eine gewindegeschnittene Öffnung (70), die in der ersten Backe (4) angebracht ist,
- eine Durchgangsöffnung (71), die in der zweiten Backe (5) angebracht ist, und
- eine Verschlussschraube (72) der zwei Backen (4, 5), die einerseits eine Gewindestange aufweist, die die Durchgangsöffnung (71) quert und durch Schraubung in die gewindegeschnittene Öffnung (70) eingreift, und andererseits einen Kopf, der gegen die zweite Backe (5) im Anschlag ist.

10. Bügel (1) nach Anspruch 9, wobei die erste und die zweite Backe (4, 5) jeweils eine Verschlussoberfläche (42; 50), vorzugsweise gekrümmt, aufweisen, die ausgebildet ist, um sich an eine Sektion des Handlaufs (2) anzupassen, wenn sich die zweite Backe (5) in der geschlossenen Position befindet, und wobei die gewindegeschnittene Öffnung (70) unter der Verschlussoberfläche (42) der ersten Backe (4) angebracht ist und die Durchgangsöffnung (71) unter der Verschlussoberfläche (50) der zweiten Backe (5) angebracht ist.

## Claims

1. A bracket (1) for fastening a rail (2) of a guardrail on a post (3), of the type including a first and a second jaws (4, 5) designed to grip all or part of a section of the rail (2), said first jaw (4) being provided with fastening means on the post (3), and said second jaw (5) being held on the first jaw (4) by means of a connecting member (6) and movably mounted on the first jaw (4) between a clamped position in which the first and second jaws (4, 5) are intended to grip all or part of a section of the rail (2), and an unclamped position allowing the introduction of the rail between the first and second jaws (4, 5);
the first jaw (4) including a front face (40) shaped to grip the rail (2) against it when the second jaw (5) is in the clamped position, and an opposite rear face (41) shaped to be anchored on the post (3), and the means for fastening the first jaw (4) on the post (3) include:
- at least one stop member (44) protruding from said rear face (41) of the first jaw (4), and
- an anchoring member (46) engaged in said through hole (45);
wherein said through hole (45) is arranged and disposed relative to said stop member (44) so that, in situation on an post (3), the anchoring member (46) passes through said through hole (45) to bear against a wall of a groove (30) of said post (3) and in return to press said stop member (44) against another wall of said groove (30) of the post (3) in order to anchor said first jaw (4) on said post (3);
said front face (40) of the first jaw (4) has, on the one hand, a clamping surface (42), preferably curved, shaped to conform to a part of the section of the rail (2) when the second jaw (5) is in the clamped position and, on the other hand, two lateral surfaces (43) connecting said clamping surface (42) to the rear face (41),
said bracket (1) being **characterized in that** the fastening means of the first jaw on the post (3) include at least one through hole (45) formed in said first jaw (4) between its front and rear faces and said through hole (45) opens into one of said lateral surfaces (43) below the clamping surface (42), so that the anchoring member (46) is accessible below the rail (2) once the latter is clamped between the two jaws (4, 5).

2. The bracket according to claim 1, wherein the first and second jaws (4, 5) are separable from each other, in particular with at least one of the first and second jaws (4, 5) separable from the connecting member (6) to allow the separation of the two jaws (4, 5).

3. The bracket (1) according to any one of the preceding claims, wherein the connecting member includes a pivot axis (6), so that the second jaw (5) is mounted movable in rotation on the first jaw (4).

4. The bracket (1) according to claims 2 and 3, wherein the pivot axis (6) is removable to allow the separation of the two jaws (4, 5).

5. The bracket (1) according to claim 4, wherein the first jaw (4) includes a fixed knuckle (47) and the second jaw (5) includes a movable knuckle (51) hinged on the fixed knuckle (47) by means of the pivot axis (6) forming a hinge axis.

6. The bracket (1) according to claim 5, wherein one of the two knuckles (47, 51) includes two parallel flanges (48) delimiting a slot and in which receiving holes (49) of the pivot axis (6) are formed, and the other of the two knuckles (47, 51) includes a projection (52) engaged in said slot and in which a receiving hole (53) of the pivot axis (6) is formed.

7. The bracket (1) according to any one of claims 3 to 6, wherein the two jaws (4, 5) define, in the clamped position, a housing extending along a main direction called longitudinal main direction intended to correspond to the longitudinal direction (X) of the rail (2), and wherein the pivot axis (6) extends parallel to this longitudinal main direction (X).

8. The bracket (1) according to any one of the preceding claims, **characterized in that** it further includes clamping means (70, 71, 72) arranged to move the second jaw (5) between the unclamped position and the clamped position and maintain the second jaw (5) in the clamped position.

9. The bracket (1) according to claim 8, wherein the clamping means comprise:
- a threaded hole (70) formed in the first jaw (4),
- a through hole (71) formed in the second jaw (5) and
- a clamping screw (72) of the two jaws (4, 5) having, on the one hand, a threaded rod passing through said through hole (71) and engaged by screwing into said threaded hole (70) and, on the other hand, a head abutting against the second jaw (5).

10. The bracket (1) according to claim 9, wherein each of the first and second jaws (4, 5) has a clamping surface (42, 50), preferably curved, shaped to conform to a part of the section of the rail (2) when the second jaw (5) is in the clamped position, and wherein the threaded hole (70) is formed below the clamping surface (42) of the first jaw (4) and the through hole (71) is formed below the clamping surface (50) of the second jaw (5).
